# EUROPÄISCHE PATENTSCHRIFT

(11) **EP 1 338 805 B1**
(45) Veröffentlichungstag und Bekanntmachung des Hinweises auf die Patenterteilung: **29.12.2004**
(21) Anmeldenummer: 03003630.5
(22) Anmeldetag: 18.02.2003
(51) Int. Cl.: F16B 21/02, F16B 17/00, F16B 37/04

(54) **Lösbare Einsatz-Verbindungsanordnung für eine Halte-Nut**
Releasable fixing insert for a retaining groove
Insert de fixation amovible pour gorge de retenue

(30) Priorität: 21.02.2002 DE 20202681 U
(43) Veröffentlichungstag der Anmeldung: 27.08.2003
(73) Patentinhaber: Schwarz Verbindungs-Systeme GmbH, 75382 Althengstett (DE)
(72) Erfinder: Schwarz, Helmut, 71 263 Weil der Stadt (DE); Homner, Bernhard, 75 362 Calw (DE)
(74) Vertreter: Blutke, Klaus Wilhelm, Dipl.-Ing.

(56) Entgegenhaltungen:
- EP-A- 1 026 415
- DE-U- 29 513 990
- DE-U- 29 820 923
- US-A- 5 271 586

## Beschreibung

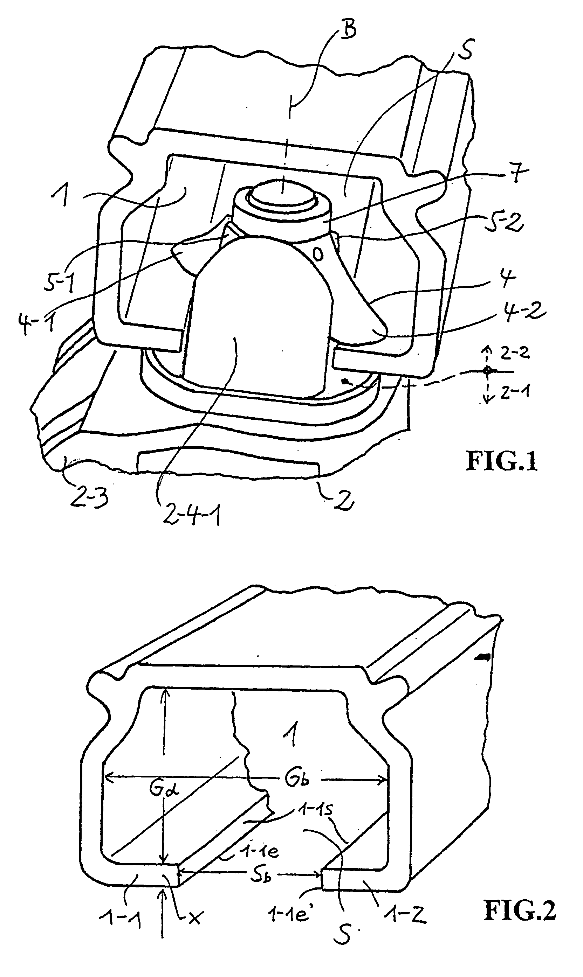

Die Erfindung bezieht sich auf eine lösbare Einsatz-Verbindungsanordnung für eine Halte-Nut.
Eine Haltenut ( s.,FIG.2) im Sinne dieser Anmeldung hat beidseits eines Schlitzes S die Halteränder 1-1, 1-2 .

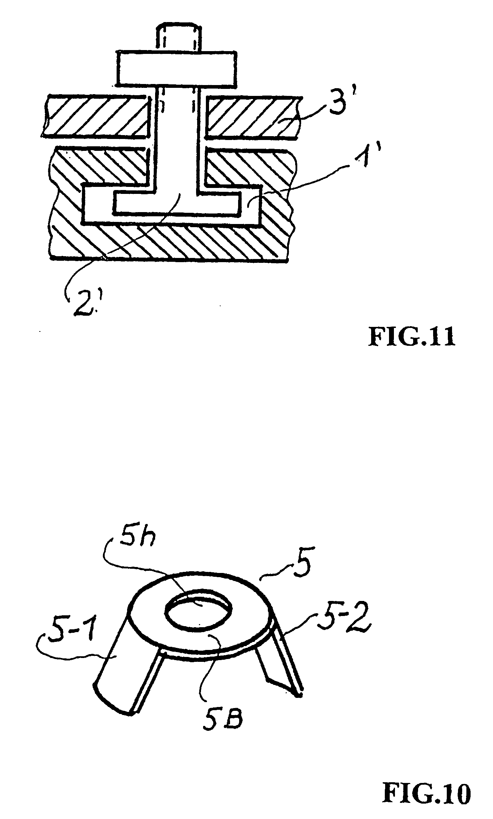

Nach dem Stand der Technik werden z.B. zu bearbeitende Werkstücke - wie allseits bekannt- auf Werktischen wie folgt befestigt ( FIG.11).
Ein Haltebolzen 2' wird mit dem Bolzenkopf in die Haltenut 1' eingeführt; das zu bearbeitende Werkstück 3' wird mit Hilfe des Haltebolzens festgeschraubt.
Nach der Deutschen Offenlegungsschrift DE 199 00267 A 1 ist eine Vorrichtung zum Befestigen eines ersten Terils an einem feststehenden zweiten Teil bekannt, welche ein in den Schlitz einer Haltenut einführbares Steckteil mit einem auf einem Drehbolzen schwenkbar angeordneten Verriegelungselement aufweist.
Nach Einführen des Steckteils in die Haltenut wird der Drehbolzen manuell gegen die Kraft einer Feder noch weiter in die Haltenut gedrückt; dabei wird das mit dem Drehbolzen verbundene Verriegelungsteil aus einer durch Anschläge begrenzten Nicht-Verriegelungs-position gebracht und kann durch Bolzendrehung in Verriegelungsposition geschwenkt werden. In Verriegelungsposition überbrückt das Verriegelungselement den Schlitz der Haltenut auf der Innenseite der Halteränder.

Eine Anordnung dieser Art weist u.a. den Nachteil auf, daß zur Herstellung der verriegelnden Verbindung zunächst ein Werkzeug benötigt wird, z.B. ein Schraubenzieher, mit welchem der Drehbolzen zuerst gedrückt und dann gedreht werden muß.

Zur Vermeidung dieses Nachteils ist es Aufgabe der Erfindung, eine lösbare Einsatz-Verbindungs-Anordnung für eine Haltenut vorzusehen, die es gestattet, zunächst ohne Hilfe eines Werkzeuges auszukommen.

Diese Aufgabe der Erfindung wird in vorteilhafter Weise durch die im Anspruch 1 genannten Merkmale gelöst.
Vorteilhafte Weiterbildungen der Erfindung sind in den Unteransprüchen gekennzeichnet.

Ausführungsbeispiele der Erfindung sind in den Zeichnungen dargestellt und werden im folgenden näher beschrieben. Es zeigen:
- FIG. 1: eine ausschnittsweise perspektivische Darstellung einer Schiene mit Halte-Nut-Profil in Verbindung mit der erfindungsgemäßen Einsatz-Verbindungsanordnung ;
- FIG. 2: eine ausschnittsweise perspektivische Darstellung der Schiene mit Halte-Nut-Profil gemäß FIG.1;
- FIG.3 A bis C: perspektivische Darstellungen der erfindungsgemäßen Einsatz-Verbindungsanordnung in verschiedenen Ansichten:

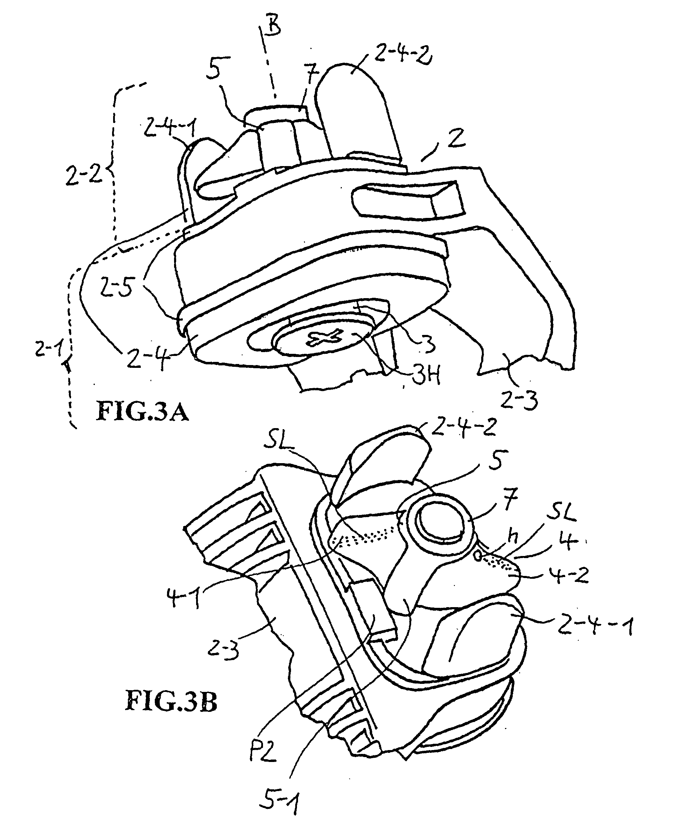

- FIG.3A :: Ansicht mit schräger Blickrichtung auf den unteren Teil;
- FIG.3B :: Ansicht mit schräger Blickrichtung auf den oberen Teil;
- FIG.3C :: perspektivische Darstellung mit angenähert seitlicher Blickrichtung;

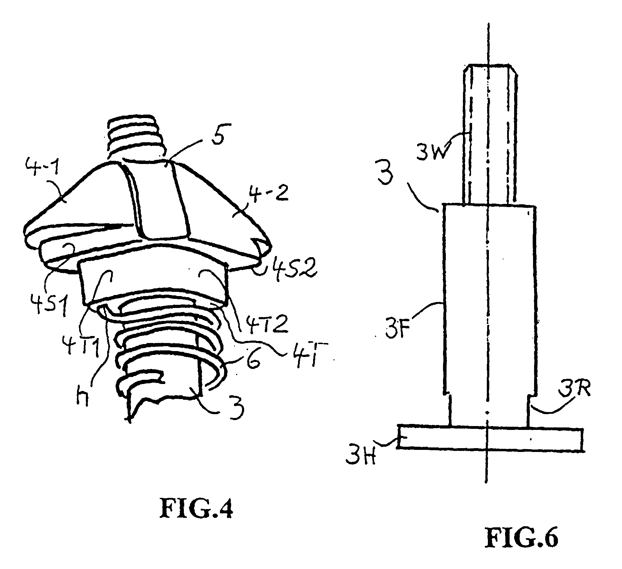

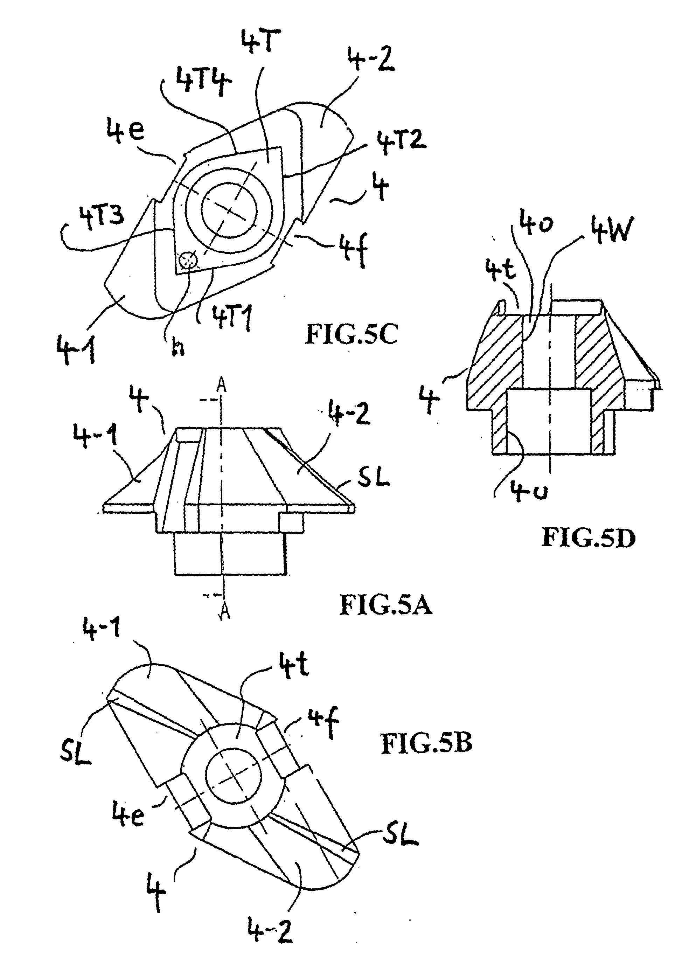

- FIG.4: eine perspektivische Darstellung des auf dem Drehbolzen schwenkbar angeordneten Verriegelungselementes;
- FIG. 5A bis 5D: verschiedene Darstellungen des Verriegelungselementes in verschiedenen Ansichten;
- FIG.5A:: Vorderansicht;
- FIG.5B:: Draufsicht;
- FIG.5C:: Unteransicht;
- FIG.5D:: Schnitt A-A gemäß FIG.5A;
- FIG.6: Seitenansicht des Drehbolzens für die Einsatz-Verbindungsanordnung;

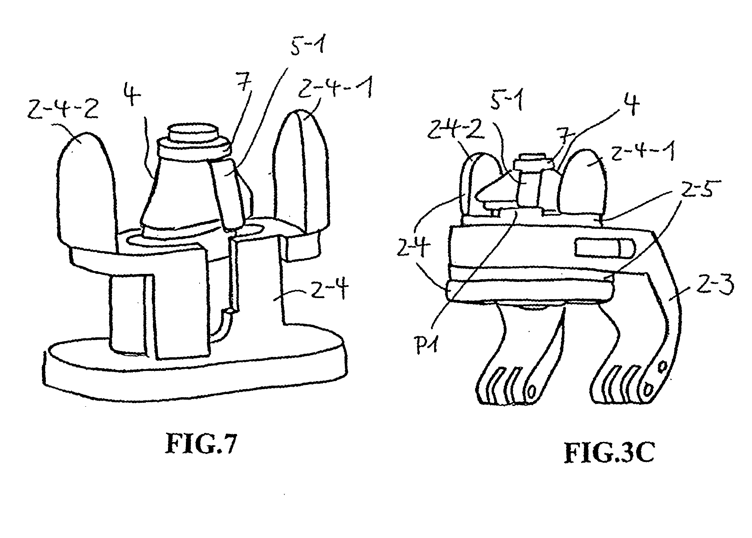

- FIG.7: schematische perspektivische Darstellung des Grundkörpers (ohne Bauteil-Verbindungsstück und ohne Dämpfungsteil);

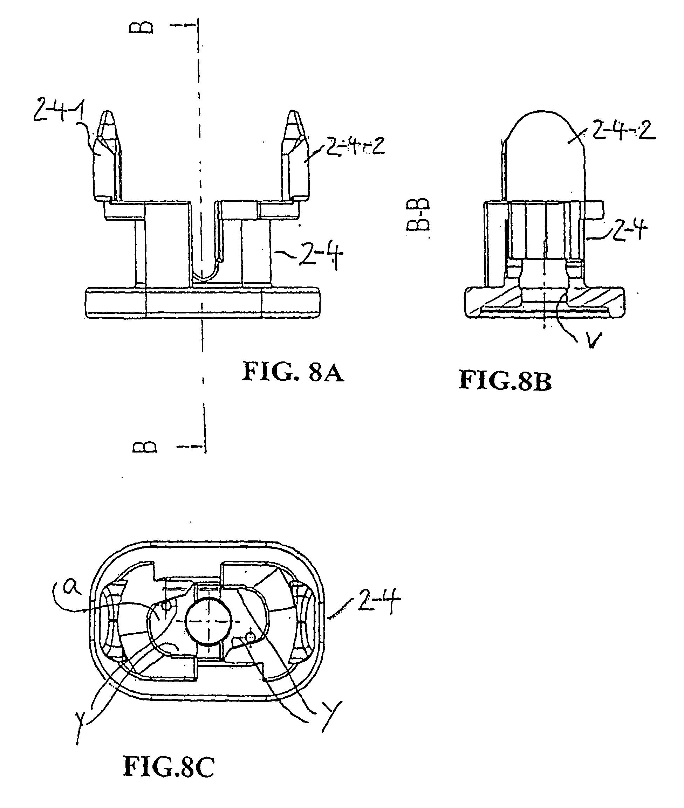

- FIG. 8A bis 8C: verschiedene Darstellungen des Grundkörpers :
- FIG.8A: Vorderansicht,
- FIG.8B: Seitenansicht mit Teil-Schnitt B-B gemäß FIG. 8A;
- FIG.8C: Draufsicht;

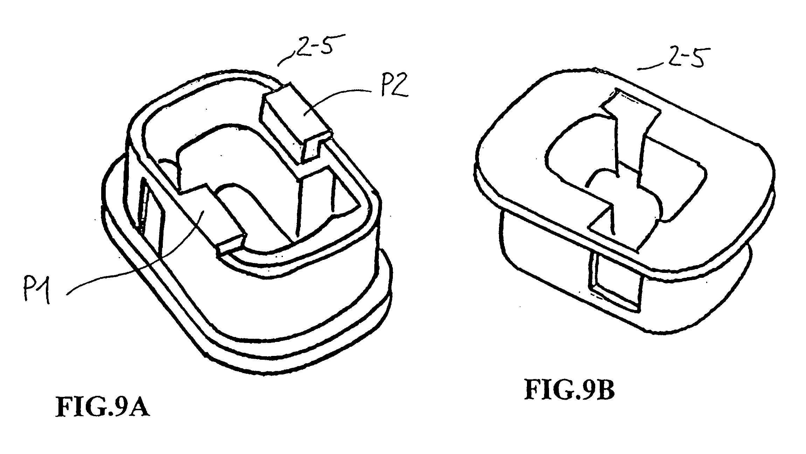

- FIG. 9A bis 9B: verschiedene perspektivische Darstellungen des Dämpfungsteils für den Grundkörpers :
- FIG.9A: Ansicht mit Blickrichtung schräg von oben;
- FIG.9B: Ansicht mit Blickrichtung schräg von unten;
- FIG. 10: perspektivische Darstellung der Auswurf-Feder;
- FIG. 11: eine schematische Schnittdarstellung einer nach dem Stand der Technik allseits bekannten Werktisch-Haltenut-Befestigung.

FIG.2 zeigt
eine ausschnittsweise perspektivische Schnittdarstellung einer Schiene mit Haltenut(1)-Profil. Die Haltenut 1 weist beidseits ihres Schlitzes S zwei seitliche Halteränder 1-1 und 1-2 auf. Die Schlitzbreite ist mit Sb , die Stärke der Halteränder 1-1 und 1-2 ist mit x, die innere Nutbreite mit Gb, die innere Nuttiefe mit Gd bezeichnet. Es sei darauf hingewiesen, daß eine Haltenut auch ohne ein Schienenprofil realisierbar ist, z.B. durch entsprechende Ausfräsungen in einem Werkstück.

FIG. 1 zeigt
eine ausschnittsweise perspektivische Darstellung einer Schiene mit Haltenut(1)-Profil gemäß FIG. 2 in Verbindung mit einer Einsatz-Verbindungsanordnung 2.
Die Einsatz-Verbindungsanordnung 2 umfaßt einen Halter 2-1 (unterhalb der Außenseite der Halteränder 1-1 und 1-2 ) und ein in die Haltenut 1 hineinragendes Steckteil 2-2.
Einzelheiten des Halters 2-1 und des Steckteils 2-2 werden auch in Zusammenhang mit Darstellungen der FIG. 3A, 3B, 3C, 7, 8A, 8B und 8C beschrieben.

In FIG. 1 ist bereits zu erkennen, daß das Steckteil 2-2 ein mit dem Halter 2-1 verbundenes Führungselement 2-4-1 aufweist, durch welches die Einsatz-Verbindungsanordnung beim Einführen des Steckteils in die Haltenut 1 ausgerichtet wird. Die maximale Breite dieses Führungselementes 4 liegt geringfügig unter der Schlitzbreite Sb; im oberen Teil weist das Führungselement 2-4-1 eine konische Verjüngung auf- dadurch ergibt sich beim Einführen in den Schlitz S eine "zentrierende" Ausrichtung des Steckteils 2-2 auf die gedachte Schlitzmitte.

Desweiteren ist in FIG. 1 ein um eine Drehbolzen-Achse B schwenkbares Verriegelungselement 4 zu erkennen. Der Drehbolzen-Kopf (in FIG. 1 nicht sichtbar, wohl aber in FIG.3A) ist an der Unterseite des Halters 2-1 zugänglich und kann von dort aus betätigt werden.

Das Verriegelungselement 4 - vorzugsweis aus Metall, insbesondere Aluminium oder rostfreiem Stahl gefertigt- hat die Form eines zweiflügligen 4-1, 4-2 propellerähnlichen Gebildes , das in Verriegelungstellung mit den Flügelenden den Schlitz S auf der Innenseite der Halteränder 1-1 und 1-2 überbrückt. In diese Verriegelungsposition gelangt das Verriegelungselement selbsttätig durch Wirkung einer auf dem Drehbolzen 3 (s. FIG. 4) angeordneten Torsionsfeder 6. Durch Bolzen(3)drehung entgegen der Kraft der Torsionsfeder (6) kann das Verriegelungselement 4 in eine Nicht-Verriegelungsposition geschwenkt werden, in welcher seine Flügelenden den Schlitz S nicht überbrücken, sondern längs derart auf ihn ausgerichtet sind, daß sich das Steckteil 2-2 samt Verriegelungsteil 4 aus der Haltenut lösen läßt.

Dieser Vorgang wird von einer zweiarmigen Auswurf-Blattfeder 5 (FIG.10) unterstützt, die sattelartig über der Schmalseite des Verriegelungselements 4 angeordnet ist. Ihre freien Blattfeder-Arme 5-1 und 5-2 verlaufen schräg nach unten; ihre Enden stehen geringfügig vom Verriegelungselement 4 derart ab, daß sie in Nicht-Verriegelungs-Position gegen die Außenkanten 1-1e und 1-1e' des Schlitzes S (s. FIG. 2) drücken und das Steckteil zumindest teilweise aus der Haltenut drücken. Dadurch kann dass Verriegelungselement 4 nach Lösen der Verbindung nicht mehr in die Verriegelungsposition "zurückschwenken".

Der Halter 2-1 der Einsatz-Verbindungsanordnung 2 umfaßt einen Grundkörper 2-4 (FIG.7, FIG.8A, 8B und 8C), ein Bauteil-Verbindungsstück (2-3) (,welches mit einem Bauteil verbindbar ist, z.B. durch Verschrauben) und ein Dämpfungsteil 2-5 (FIG. 3C, FIG.9A und FIG. 9B).

Es sei darauf hingewiesen, daß das Bauteil auch direkt mit dem Grundkörper 2-4 verbunden sein kann.

FIG.3 A bis C zeigen
perspektivische Darstellungen der erfindungsgemäßen Einsatz-Verbindungsanordnung 2 gemäß FIG. 1 in verschiedenen Ansichten.

FIG. 3A zeigt
eine Ansicht mit Blickrichtung schräg von unten. In dieser Ansicht ist zu erkennen, daß das Steckteil 2-2 zwei Führungselemente 2-4-1 und 2-4-2 aufweist, zwischen denen das Verriegelungselement 4 auf dem Drehbolzen 3 mit der Drehbolzen-Achse B angeordnet ist. Diese beiden Führungselemente gestatten beim Einführen des Steckteils in den Schlitz S der Haltenut 1 ein sicheres Ausrichten der Einsatz-Verbindungsanordnung 2 auf Schlitzmitte.
Durch Wirkung der auf dem Drehbolzen 3 angeordneten Torsionsfeder (nicht sichtbar) nimmt das Verriegelungselement 4
- auch wenn die Einsatz-Verbindungsanordnung 2 nicht mit der Haltenut 1 verbunden ist - eine Position ein, welche der Verriegelungsposition entspricht. In einer solchen Position reichen die Flügelenden des Verriegelungselementes über die gedachte Breite des Schlitzes hinaus, so daß aus diesem Grunde
- wären nicht besondere Maßnahmen getroffen- das Steckteil 2-2 gar nicht durch den Schlitz S in die Haltenut 1 gesteckt werden könnte.
Die Torsionsfeder 6 (FIG.4) ist auf der Drehbolzenachse angeordnet; eines ihrer Enden steckt in einer Bohrung h ( s. FIG.4 , FIG.5C) des Verriegelungselementes 4; ihr anderes Ende stützt sich in einer Aussparung des Halters ab oder ist direkt mit ihm verbunden.

Es wurde bereits erwähnt im Zusammenhang mit FIG.1, daß das Verriegelungselement 4 durch manuelle Bolzendrehung entgegen der Kraft der Torsionsfeder in eine der Nicht-Verriegelungsposition entsprechende Lage gebracht werden kann, was für das Lösen der Einsatz-Verbindungsanordnung aus der Haltenut wichtig ist.

Beim Hineinstecken des Steckteils 2-2 in den Schlitz S der Haltenut ist gewährleistet, daß dabei das Verriegelungselement in eine der Nicht-Verriegelungsposition entsprechende Lage gebracht wird , da sich sonst das Verriegelungselement gar nicht durch den Schlitz hindurchführen ließe.

Dies wäre zwar auch durch manuelles Drehen des Drehbolzens erreichbar; jedoch soll beim Einsteckvorgang erfindungsgemäß das Verriegelungselement "selbsttätig" in eine Lage gelangen, die ein Hindurchführen durch den Schlitz gestattet:

Zu diesem Zweck weist das Verriegelungselement eine besondere geometrische Form auf FIG. 3B, 4, 5A, 5B und 5C). Jeder seiner Flügel 4-1, 4-2 hat eine Gleitschräge (SL) , die beim Einstecken des Steckteils 2-2 in die Haltenut 1 derart auf die Schlitz-Außenkanten 1-1e und 1-1e' gedrückt wird, daß das Verriegelungselement 4 entgegen der Feder(6)kraft in eine durch den Schlitz S hindurchführbare Position verschwenkt wird.

Sobald der Einsteckvorgang - für den kein Werkzeug erforderlich ist ( das Steckteil muß lediglich in die Haltenut gedrückt werden) -abgeschlossen ist, schwenken die Flügelarme 4-1 und 4-2 des Verriegelungselementes 4 durch die Kraft der Torsionsfeder getrieben über die Innenseite der Halteränder 1-1, 2-2 (FIG.1) in Verriegelungsposition und bewirken dadurch die Verbindung zwischen Haltenut 1 und der Einsatz-Verbindungssnordnung 2.
In FIG. 3A sind das Steckteil (wie auch in FIG. 1) mit 2-2, der Halter mit 2-1, der Grundkörper mit 2-4, das Bauteilverbindungsstück mit 2-3, das Dämpfungsteil mit 2-5 und die Auswurf-Blattfeder mit 5 bezeichnet.

FIG. 3B zeigt
eine Ansicht der Einsatz- Verbindungsanordnung mit Blick schräg von oben. Die Bezeichnungen der einzelnen Teile sind die gleichen wie in FIG. 3A. Die Darstellung in FIG. 3B ist geeignet, den Verlauf der Gletschrägen SL zu erkennen.
Die Gleitschrägen SL sind in FIG.3B gepunktet angedeutet; diese Darstellung der Gleitschrägen erfolgt jedoch nur hilfsweise - praktisch ist die Gleitschräge als leicht gewölbte Gleitschrägenfläche ausgeführt, um einer möglichst optimalen Verschwenkbarkeit des Verriegelungselementes zu entsprechen, wenn dessen Flügel 4-1 und 4-2 auf die Schlitz-Außenkanten 1-1e und 1-1e' beim Hineinstecken des Steckteils in die Haltenut gedrückt werden.

FIG. 3C zeigt
eine perspektivische Darstellung der Einsatz-verbindungsanordnung 2 mit angenähert seitlicher Blickrichtung. Die Bezeichnungen der einzelnen Teile sind die gleichen wie in FIG. 3A und 3B. Diese Darstellung läßt auch erkennen, wie das Bauteil-Verbindungsstück 2-3 ausgeführt sein kann: z.B. mit zwei kammartigen Armen, welche mit dem daran zu befestigenden Bauteil zu verstiften sind.

Die FIG.4 zeigt
eine perspektivische auszugsweise Darstellung des auf dem Drehbolzen 3 schwenkbar angeordneten Verriegelungselementes 4. Das Verriegelungselement 4 wird von einer Torsions-Spiralfeder 6 so beaufschlagt, daß es in Verriegelungsposition schwenkt.

Desweiteren weist das Verriegelungselement Anschlagsflächen 4S1 und 4S2 ( 4S2 auf der rückseitigen Lage), die bei einer Schwenkung des Verriegelungselements -für den Fall, daß die Einsatz-verbindungsanordnung mit der Haltenut verbunden istauf die (in FIG. 4 nicht dargestellten) Innenseiten 1-1s der Halteränder 1-1 und 1-2 (s.FIG.2) treffen und dadurch die Schwenkbewegung begrenzen. Beim Auftreffen auf die Halteränder wird ein Klickgeräusch erzeugt, wodurch zugleich auch eine akkustische Verriegelungskontrolle gegeben ist.

Außerdem umfaßt das Verriegelungselement 4 noch einen rauteförmigen Ansatz 4T mit den Seitenflächen 4T1, 4T2 auf der sichtbaren Vorderseite und mit den auf der Rückseite liegenden Seitenflächen 4T3 und 4T4 (s. FIG. 5C).
Die durch die Torsions-Spiralfeder bedingte Schwenkbewegung des Verriegelungselementes wird - für den Fall, daß die Einsatz-Verbindungsanordnung nicht mit der Haltenut verbunden istdadurch begrenzt, daß die Seitenflächen 4T1, 4T2, 4T3 und 4T4 an der Wandung y einer entsprechenden Aussparung (FIG.8C) des Grundkörpers 2-4 anschlagen.

FIG.4 läßt erkennen, daß das freie Ende des Federarmes 5-1 der Auswurf- Blattfeder 5 vom Verriegelungselement 4 etwas absteht. Das gleiche gilt für den auf der Rückseite der Verriegelungselementes verlaufenden Federarm 5-2 (nicht sichtbar).

FIG. 10 zeigt
eine perspektivische Darstellung dieser Auswurf-Blattfeder 5 mit einem Basisteil 5B und abgewinkelten schräg nach außen verlaufenden Blattfeder-Armen 5-1 und 5-2. Das Basisteil weist eine Bohrung 5h zum Hindurchführen des Drehbolzens auf. Die Auswurf-Blattfeder 5 ist mit ihrem Basisteil formschlüssig in einer entsprechenden Aussparung des Verriegelungsteiles angeordnet, so daß sie die Schwenkbewegungen des Verriegelungsteiles mitmacht.
Die auf dem Drehbolzen 3 sitzende Torsions-Spiralfeder 6 steckt mit ihrem oberen Ende in einer Bohrung h des Verriegelungselementes. Ihr anderes Ende ( nicht dargestellt) stützt sich an der Wandung einer Aussparung im Grundkörper ab.

FIG. 5A bis 5E zeigen
verschiedene Darstellungen des Verriegelungselementes 4 in verschiedenen Ansichten:
FIG.5A: Vorderansicht;
FIG.5B: Draufsicht;
FIG.5C: Unteransicht;
FIG.5D: Schnitt A-A gemäß FIG. 5.
In diesen Darstellungen sind wie auch in FIG. 4 die Flügel mit 4-1 und 4-2; die Anschlagsflächen mit 4S1 und 4S2, der rautenförmige Ansatz mit mit 4T und die Seitenflächen mit 4T1, 4T2, 4T3 und 4T4 gekennzeichnet. Die Bohrung h dient der Aufnahme des einen Endes der Torsionsfeder. Die Bohrungen 4o und 4u (FIG.5D) dienen der Aufnahme des Drehbolzens (FIG. 6). Die seitlichen Aussparungen 4e und 4f (FIG. 5B) und die obere Aussparung 4t (s. auch FIG.5B, 5C und 5D) dienen der formschlüssigen Aufnahme der Auswurf-Blattfeder 5 in ihrem oberen Teil mit den Federarmansätzen.

FIG.6 zeigt die Seitenansicht des Drehbolzens 3 für die Einsatz-Verbindungsanordnung 2. Der Drehbolzen umfaßt einen Bolzenkopf 3H, einen daran anschließenden glatten Schaft-Teil 3F und einen Gewinde-Schaft-Teil 3 W geringeren Durchmessers. Am Bolzenkopf weist der Schaft einen Einstich 3R auf, in welchen im zusammengebauten Zustand ein Vorsprung v des Grundkörpers 2-4 (FIG. 8B) eingreift. Diese Bolzensicherung ist durch die elastische Eigenschaft des Grundkörpermaterials möglich. Beim Hineindrücken des Bolzens in den Grundkörper weitet sich deren Bohrung vorübergehend etwas, bis der Vorsprung v in den Einstichbereich 3R eingreift.

Das Verriegelungsteil 4 (s. FIG. 5D) hat im oberen Teil eine Bohrung 4o mit Innengewinde 4W, welches mit dem Gewinde-Schaft-Teil 3 W (FIG.6) des Drehbolzens verschraubt werden kann. Im unteren Teil hat das Verriegelungsteil 4 eine Bohrung 4u zur Aufnahme des oberen Teils des glatten Drehbolzen-Schaft-Teils 3F (FIG.6).

Bisher wurde nur beschrieben, wie die Einsatz-Verbindungsanordnung 2 in die Haltenut 1 eingeführt bzw. aus ihr gelöst werden kann. Beim Einführen wird das Verriegelungselement 4 durch Druck der Schlitzaußenkanten 1-1e und 1-1e' auf die Gleitschrägen SL der Flügel 4-1 und 4-2 gegen die Kraft der Torsionsfeder in eine Lage zurückgeschwenkt , die ein Hindurchführen des Verriegelungselementes durch den Schlitz S in die Haltenut 1 gestattet.
Sobald jedoch die Halteränder-Kanten nicht mehr auf die Gleitschrägen einwirken können , schwenkt (Torsions)federkraftbedingt das Verriegelungselement in Verriegelungsposition. In dieser Lage kann es nicht mehr aus der Haltenut herausfallen oder herausgezogen werden, wenngleich es in der Haltenut der Länge nach noch verschoben werden kann. Um die Verbindung der Einsatz-Verriegelungsanordnung mit der Haltenut fester zu machen, wird der Drehbolzen (mit seinem Außengewinde) 3W (FIG.6) in das Innengewinde 4W (FIG. 5D) des Verriegelungsteiles 4 hineingeschraubt. Dabei werden die Flügel 4-1 und 4-2 des Verriegelungsteiles 4 zunehmend gegen die Innenseiten der Halteränder 1-1 und 1-2 gezogen, wobei die Halteränder zwischen dem Halteteil 2-1 und den Flügeln des Verriegelungselementes zunehmend festgeklemmt werden.
Vor dem Lösen der Einsatz-Verriegelungsanordnung aus der Haltenut muß zunächst diese Schraubverbindung soweit gelöst werden, bis das Verriegelungsstück durch Drehbolzen-Drehung gegen die Kraft der Torsionsfeder in die Nicht-Verriegelungsposition geschwenkt werden kann. Ein völliges Herausschrauben des Drehbolzens aus dem Verriegelungsstück ist nicht möglich, da die über der Auswurf-Feder 5 auf dem Drehbolzen sitzende Ringmutter 7 auf ihrer Oberseite verdrehfest mit dem Drehbolzen verbunden ist.

FIG.7 zeigt eine
schematische perspektivische Darstellung des Grundkörpers 2-4 (ohne Bauteil-Verbindungsstück , ohne Dämpfungsteil) mit eingesetztem Drehbolzen mit Verriegelungselement. eingesetztem Drehbolzen mit Verriegelungselement.

FIG. 8A bis 8C zeigen verschiedene Ansichten des den Halter 2-1 und das Steckteil 2-2 umfassenden Grundkörpers 2-4.
FIG.8A zeigt
eine Vorderansicht des Grundkörpers,
FIG.8B zeigt
eine Draufsicht des Grundkörpers, und
FIG.8C zeigt
eine Schnittansicht des Grundkörpers gemäß Schnitt B-B in FIG.8.

Diese Darstellungen dienen einer detaillierten Darstellung des bereits erwähnten Grundkörpers 2-4.
Der Grundkörper 2-4 ist einteilig und aus Kunststoff hergestellt, vorzugsweise aus Polyamid.
Er dient der Aufnahme und Führung des Drehbolzens 3 mit der Torsionsfeder 6. Auf dem oberen Ende des Drehbolzens ist das Verriegelungselement 4 angeordnet ist. Eine zweiteilige Ausführung des Grundkörpers ist auch möglich und aus Kostenund fertigungstechnischen Gründen vorteilhaft. Die beiden Teile werden z.B. durch Steck- oder Schweißverbindung verbunden.

Die Torsionsfeder (nicht sichtbar) ist in der Aussparung 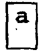 des Grundkörpers 2-4 angeordnet (FIG. 8C). Eines ihrer Enden ist wie bereits erwähnt, mit dem Verriegelungselement verbunden, während sich ihr anderes Ende an der Wandung dieser Aussparung abstützt. Die Aussparung a nimmt auch den rautenförmigen Ansatzes 4T des Verriegelungselements 4 auf, in der das rautenförmige Teil 4T begrenzt verschwenkt werden kann.

Die Anschlagsflächen 4T1, 4T2, 4T3 und 4T4 des rautenförmigen Teils 4T schlagen zur Begrenzung der Schwenkbewegung des Verriegelungsteiles an entsprechend ausgebildeten Wandteile y der Aussparung a an. Diese Begrenzung der Schwenkbewegung des Verriegelungselementes wird wirksam, wenn die Einsatz-Verriegelungsanordnung nicht mit der Haltenut verbunden ist.

Die beiden Führungselemente des Grundkörpers sind auch wie in anderen FIG. mit 2-4-1 und 2-4-2 bezeichnet.
Der Grundkörper 2-4 dient desweiteren der Aufnahme des in FIG.3C ersichtlichen Bauteil-Verbindungsstücks 2-3 und des in FIG.9 einzeln dargestellten Dämpfungs-Teils 2-5. Das Bauteil-Verbindungsstück ist vorzugsweise aus Kunststoff, insbesondere aus PEI (Polyetherimid) gefertigt.

FIG. 9A bis 9B zeigen
verschiedene perspektivische Darstellungen des Dämpfungsteils für den Halter:
FIG.9A zeigt eine Ansicht mit Blickrichtung schräg von oben;
FIG.9B eine Ansicht mit Blickrichtung schräg von unten.
Das Dämpfungsteil besteht aus schwingungsdämpfenden elastischem Material, vorzugsweise aus Silikon. Es ist in der zusammengebauten Einsatz-Verbindungsanordnung 2 (FIG.1) zwischen dem Bauteil-Verbindungsstück 2-3 und dem Grundkörper 2-4 angeordnet. Dadurch werden bauteilseitig oder haltenutseitig auftretende Schwingungen nicht direkt übertragen; sie werden gedämpft bzw. vom Dämpfungsteil absorbiert.
Das Dämpfungsteil 2-5 weist zwei Puffer P1 und P2 auf, welche bei mit der Haltenut (1) verbundenen Einsatz-Verbindungsanordnung (2) an der Unterseite der Halteränder (1-1, 1-2) der Haltenut (1) anliegen (s. auch FIG.1 und andere). Durch ihre Elastizität dienen sie nicht nur der Schwingungsdämpfung, sondern zugleich auch einem Toleranzausgleich bei der Montage zwischen Haltenut und Einsatz-Verbindungsanordnung.

## Patentansprüche

1. Lösbare Einsatz-Verbindungsanordnung für ein Haltenut (1) mit einer Schlitzöffnung (5) zwischen zwei Halterändern (I-1, I-2),
wobei die Einsatz-Verbindungsanordnung einen Halter (2-1) mit einem in die Haltenut (1) einführbaren Steckteil (2-2) mit einem
Verriegelungselement (4) aufweist,
**dadurch gekennzeichnet,**
**daß** ein Dreh-Bolzen (3) mit einem im Steckteil (2-2) auf diesem schwenkbar angeordneten Verriegelungs-Element (4) vorgesehen ist,
**daß** das Verriegelungs-Element (4) durch eine Feder(6) in eine den Schlitz (S) auf der Innenseite der Halteränder (1-1, 1-2) überbrückende Verriegelungsposition bringbar ist, daß das Verriegelungs-Element (4) durch Drehung des Drehbolzens(3) entgegen der Federkraft in eine Nicht-Verriegelungsposition bringbar ist, in welcher das Steckteil (2-2) aus der Haltenut(1) lösbar ist.

2. Anordnung nach Anspruch 1,
**dadurch gekennzeichnet,**
**daß** das Verriegelungselement (4) eine zweiflügelige propellerähnliche Form aufweist,
**daß** jeder Flügel (4-1, 4-2) des Verriegelungselementes (4) eine Gleitschräge (SL) aufweist,
**daß** jede Gleitschräge (SL) beim Einstecken des Steckteils (2-2) in die Haltenut (1) derart gegen die Schlitzrandkanten (1-le, 1-1e') drückbar ist, daß dabei das Verriegelungs-Element (4) entgegen der Federkraft in eine durch den Schlitz (S) hindurchführbare Position verschwenkbar ist.

3. Anordnung nach Anspruch 1 oder 2,
**dadurch gekennzeichnet, daß**
der Halter (2) ein Bauteil-Verbindungsstück (2-3) umfaßt.

4. Anordnung nach einem der Ansprüche 1 oder 2,
**dadurch gekennzeichnet,**
**daß** die das Verriegelungselement (4) beaufschlagende Feder (6) eine Torsions-Spiralfeder ist.

5. Anordnung nach Anspruch 4,
**dadurch gekennzeichnet,**
**daß** die Torsions-Spiralfeder (6) auf dem Drehbolzen (3) angeordnet ist.

6. Anordnung nach einem der Ansprüche 1 bis 4,
**dadurch gekennzeichnet, daß** der Dehbolzen (3) und das Verriegelungselement (4) ein miteinander verschraubbares Gewinde (3W, 4W) aufweist, durch das das Verriegelungselement (4) gegen die Innenseite der Halteränder (1-1, 1-2) festklemmbar ist.

7. Anordnung nach einem der Ansprüche 1 bis 5,
**dadurch gekennzeichnet,**
**daß** das Verriegelungselement (4) mit einer zweiarmigen Auswurf-Blattfeder (5) verbunden ist,
welche zusammen mit dem Verriegelungselement (4) schwenkbar ist,
und **daß** die freien Enden der Federarme (5-1, 5-2) in Nicht-Verriegelungs-Position derart gegen den Schlitzrand (1-le, 1-1e') drücken, daß dabei die Einsatz-Verbindungsanordnung (2) ganz oder teilweise aus dem Schlitz (S) herausdrückbar ist.

8. Anordnung nach einem der Ansprüche 1 bis 6,
**dadurch gekennzeichnet,**
**daß** das Steckteil (2-2) mindestens ein in den Schlitz (S) einführbares Führungselement (2-4-1, 2-4-2) zur Ausrichtung der Einsatz-Verrbindungs-Anordnung auf die Haltenut (1). aufweist.

9. Anordnung Anspruch 8,
**dadurch gekennzeichnet,**
**daß** das Steckteil (2-2) zwei in den Schlitz (S) einführbare Führungselemente (2-4-1, 2-4-2) zur Ausrichtung der Einsatz-Verrbindungs-Anordnung auf die Haltenut (1) aufweist,
und **daß** das um die Drehbolzen-Achse (B) schwenkbare Verriegelungselement (4) zwischen diesen Führungselementen (2-4-1, 2-4-2) angeordnet ist.

10. Anordnung nach einem der Ansprüche 3 bis 9,
**dadurch gekennzeichnet**,
zwischen dem Bauteil-Verbindungsstück (2-3) und den übrigen Teilen der Einsatzverbindungs-Anordnung ein Dämpfungsteil (2-5) angeordnet ist.

11. Anordnung nach Anspruch 10,
**dadurch gekennzeichnet,**
**daß** das Dämpfungsteil (2-5) Dämpfungspuffer (P1, P2) aufweist, welche bei mit der Haltenut (1) verbundenen Einsatz-Verbindungs-Anordnung (2) an den Außenseiten der Halteränder (1-1, 1-2) anliegen.

12. Anordnung nach einem der Ansprüche 1 bis 11,
**dadurch gekennzeichnet,**
**daß** das Verriegelungs-Element (4) seine Schwenkbewegung begrenzende Anschläge (4S1, 4S2) für den Schlitzrand (1-1s) aufweist.

13. Anordnung nach einem der Ansprüche 1 bis 12,
**dadurch gekennzeichnet,**
**daß** das Verriegelungselement (4) seine Schwenkbewegung begrenzende Anschläge (4T1, 4T2, 4T3 , 4T4) für eine Aussparung (a) im Halter (2-1) aufweist.

## Claims

1. Detachable insert connection arrangement for a retaining channel (1) with a slot-type opening (S) between two retaining edges (1-1, 1-2), where the insert connection arrangement has a holder (2-1) with a push-in part (2-2) with a locking element (4) which can be pushed into the retaining channel (1),
**characterised in**
**that** a rotation pin (3) with a locking element (4) is provided which is capable of turning on the push-in-part (2-2),
**that** the locking element (4) can be brought by a spring (6) into a locking position which bridges the slot (S) on the inside of the retaining edges (1-1, 1-2),
**that** the locking element (4) by turning the rotation pin (3) against the force of the spring, can be brought into a non-locking position in which the push-in part (2-2) is detachable from the retaining channel (1).

2. Arrangement in accordance with claim 1,
**characterised in**
**that** the locking element (4) has two wings arranged in the form of a propeller,
**that** each wing (4-1, 4-2) of the locking element (4) has a slide taper (SL),
**that**, when the push-in part (2-2) is pushed into the retaining channel (1), each slide taper (SL) can be pressed against the edges of the slot (1-1e, 1-1e') in such a way that the locking element (4) can be turned against the force of the spring into a position where it can be pushed through the slot (S).

3. Arrangement in accordance with claim 1 or 2
**characterised in**
**that** the holder (2) comprises a part (2-3) for connection to a component.

4. Arrangement in accordance with one of the claims 1 or 2
**characterised in**
**that** the spring (6) acting on the locking element (4) is a spiral torsion spring.

5. Arrangement in accordance with claim 4
**characterised in**
**that** the spiral torsion spring (6) is arranged on the rotation pin (3).

6. Arrangement in accordance with one of the claims 1 to 4
**characterised in**
**that** the rotation pin (3) and the locking element (4) have a thread (3W, 4W) for screwing them together, by means of which the locking element (4) can be clamped against the inside of the retaining edges (1-1, 1-2).

7. Arrangement in accordance with one of the claims 1 to 5
**characterised in**
**that** the locking element (4) is connected with a double-armed ejector leaf spring (5), which can be turned with the locking element (4),
and **that** the free ends of the spring arms (5-1, 5-2), when in the non-locking position, press against the edge of the slot (1-1e, 1-1e') in such a way that the insert connection arrangement (2) can be pressed wholly or partially out of the slot (S).

8. Arrangement in accordance with one of the claims 1 to 6
**characterised in**
**that** the push-in part (2-2) has at least one guide element (2-4-1, 2-4-2) which can be fitted into the slot (S) to align the insert connection arrangement to the retaining channel (1).

9. Arrangement in accordance with claim 8
**characterised in**
**that** the push-in part (2-2) has two guide elements (2-4-1, 2-4-2) which can be fitted into the slot (S) to align the insert connection arrangement to the retaining channel (1), and that the locking element (4) which can be turned around the axis of the rotation pin (B) is arranged between these guide elements (2-4-1, 2-4-2).

10. Arrangement in accordance with one of the claims 3 to 9
**characterised in**
**that** a damping part (2-5) is arranged between the component-connection part (2-3) and the other parts of the insert connection arrangement.

11. Arrangement in accordance with claim 10
**characterised in**
**that** the damping part (2-5) has damping buffers (P1, P2) which lie against the outer sides of the retaining edges (1-1, 1-2) of the insert connection arrangement when connected with the retaining channel (1).

12. Arrangement in accordance with one of the claims 1 to 11
**characterised in**
**that** the locking element (4) has stops (4S1, 4S2) for the edge of the slot (1-1s) which limit its turning movement.

13. Arrangement in accordance with one of the claims 1 to 12
**characterised in**
**that** the locking element (4) has stops (4T1, 4T2, 4T3, 4T4) for a recess (a) in the holder (2-1) which limit its turning movement.

## Revendications

1. Dispositif d'assemblage à insert démontable pour un écrou de fixation (1) avec une ouverture fendue (S) entre deux bords de fixation (1-1, 1-2), lequel dispositif d'assemblage à insert possède une fixation (2-1) avec une partie d'insert (2-2) pouvant être insérée dans l'écrou de fixation (1) et possédant un élément de verrouillage (4), **caractérisé en ce qu'**il est prévu un boulon tournant (3) avec un élément de verrouillage (4) disposé sur lui de manière pivotante dans la partie d'insert (2-2),
**en ce que** l'élément de verrouillage (4) peut être amené par un ressort (6) dans une position de verrouillage franchissant la fente (S) sur la face intérieure des bords de fixation (1-1, 1-2),
**en ce que** l'élément de verrouillage (4) peut être amené par la rotation du boulon tournant (3) contre la force du ressort dans une position de non-verrouillage dans laquelle la partie d'insert (2-2) peut être démontée de l'écrou de fixation (1).

2. Dispositif selon la revendication 1, **caractérisé en ce que** l'élément de verrouillage (4) possède une forme d'hélice à deux pales,
**en ce que** chaque pale (4-1, 4-2) de l'élément de verrouillage (4) présente un chanfrein de glissement (SL),
**en ce que** chaque chanfrein de glissement (SL) peut être appuyé contre les arêtes de bord de la fente (1-1e, 1-1e') lors de l'insertion de la partie d'insert (2-2) dans l'écrou de fixation (1) de telle manière que l'élément de verrouillage (4) puisse alors être basculé contre la force du ressort dans une position pouvant traverser la fente (S).

3. Dispositif selon la revendication 1 ou 2, **caractérisé en ce que** la fixation (2) comprend un organe d'assemblage d'éléments (2-3).

4. Dispositif selon l'une quelconque des revendications 1 ou 2, **caractérisé en ce que** le ressort (6) contraignant l'élément de verrouillage (4) est un ressort de torsion hélicoïdal.

5. Dispositif selon la revendication 4, **caractérisé en ce que** le ressort de torsion hélicoïdal (6) est disposé sur le boulon tournant (3).

6. Dispositif selon l'une quelconque des revendications 1 à 4, **caractérisé en ce que** le boulon tournant (3) et l'élément de verrouillage (4) présentent un filetage (3W, 4W) pouvant engrené l'un dans l'autre, par lequel l'élément de verrouillage (4) peut être serré contre la face intérieure des bords de fixation (1-1, 1-2).

7. Dispositif selon l'une quelconque des revendications 1 à 5, **caractérisé en ce que** l'élément de verrouillage (4) est relié à un ressort à lame d'éjection (5) à deux bras, qui peut pivoter en même temps que l'élément de verrouillage (4),
et **en ce que** les extrémités libres des bras de ressort (5-1, 5-2) appuient, dans la position de non-verrouillage, contre le bord de la fente (1-1e, 1-1e') de telle manière que le dispositif d'assemblage à insert (2) puisse être entièrement ou partiellement chassé hors de la fente (S).

8. Dispositif selon l'une quelconque des revendications 1 à 6, **caractérisé en ce que** la partie d'insert (2-2) possède au moins un élément de guidage (2-4-1, 2-4-2) pouvant être introduit dans la fente (S) pour orienter le dispositif d'assemblage à insert vers l'écrou de fixation (1).

9. Dispositif selon la revendication 8, **caractérisé en ce que** la partie d'insert (2-2) possède deux éléments de guidage (2-4-1, 2-4-2) pouvant être introduits dans la fente (S) pour orienter le dispositif d'assemblage à insert vers l'écrou de fixation (1) et **en ce que** l'élément de verrouillage (4) capable de pivoter autour de l'axe du boulon tournant (B) est disposé entre ces éléments de guidage (2-4-1, 2-4-2).

10. Dispositif selon l'une quelconque des revendications 3 à 9, **caractérisé en ce qu'**un élément amortisseur (2-5) est disposé entre l'organe d'assemblage d'éléments (2-3) et les autres parties du dispositif d'assemblage à insert.

11. Dispositif selon la revendication 10, **caractérisé en ce que** l'élément amortisseur (2-5) présente des tampons amortisseurs (P1, P2) qui reposent sur les faces extérieures des bords de fixation (1-1, 1-2) lorsque le dispositif d'assemblage à insert (2) est assemblé avec l'écrou de fixation (1).

12. Dispositif selon l'une quelconque des revendications 1 à 11, **caractérisé en ce que** l'élément de verrouillage (4) possède des butées (4S1, 4S2) limitant son mouvement pivotant pour le bord (1-1s) de la fente.

13. Dispositif selon l'une quelconque des revendications 1 à 12, **caractérisé en ce que** l'élément de verrouillage (4) possède des butées (4T1, 4T2, 4T3, 4T4) limitant son mouvement pivotant pour une ouverture (a) dans la fixation (2-1).
